# FASCICULE DE BREVET EUROPEEN

(11) **EP 3 512 734 B1**
(45) Date de publication et mention de la délivrance du brevet: **04.05.2022**
(21) Numéro de dépôt: 17772628.8
(22) Date de dépôt: 13.09.2017
(51) Int. Cl.: B60K 35/00, G02B 27/01

(54) **DISPOSITIF D'AFFICHAGE TÊTE HAUTE AJUSTABLE POUR VÉHICULE**
VERSTELLBARE HEAD-UP-ANZEIGEVORRICHTUNG FÜR EIN FAHRZEUG
ADJUSTABLE HEAD-UP DISPLAY DEVICE FOR A VEHICLE

(30) Priorité: 13.09.2016 FR 1658533
(43) Date de publication de la demande: 24.07.2019
(73) Titulaire: MMT AG, 6300 Zug (CH)
(72) Inventeur: ANDLAUER, Vincent, 2502 Biel/Bienne (CH); ROTH, Stanley, 2057 Villiers (CH); THEILLER, Julien, 70200 Lure (FR)
(74) Mandataire: IP Trust
(86) Numéro de dépôt international: PCT/EP2017/072983
(87) Numéro de publication internationale: WO 2018/050679

(56) Documents cités:
- EP-A1- 3 041 130
- JP-A- 2004 061 861
- JP-A- 2005 153 723
- US-A- 5 296 868
- US-A1- 2012 188 650

## Description

### Domaine de l'invention

La présente invention concerne le domaine des équipements de projection d'informations sur le pare-brise dans le champ de vision du conducteur d'un véhicule automobile. Le système de projection comporte un miroir qui peut être basculé lorsque le système est inactif.

Ces équipements, initialement utilisés surtout dans le domaine de l'aéronautique et notamment des avions de combats, sont de plus en plus utilisés dans le domaine de l'automobile car ils permettent d'améliorer significativement la sécurité : un automobiliste met environ une seconde pour chercher et lire une information de base sur son tableau de bord ; pendant ce laps de temps, il ne regarde pas la route et son véhicule parcourt 14 mètres à 50 km/h et 36 mètres à 130 km/h.

La technologie embarquée sur les automobiles actuelles fonctionne avec un projecteur situé derrière le tableau de bord qui projette à l'aide de diodes ou à travers un écran à cristaux liquides des informations via un miroir sur le pare-brise, le conducteur ayant l'illusion que ces dernières se trouvent plusieurs mètres devant lui. Le conducteur sélectionne la hauteur, l'intensité de l'affichage et les informations souhaitées (par exemple vitesse de la voiture, niveau du carburant, alertes mécaniques, informations de l'ordinateur de bord ou du système de navigation).

Lorsque le véhicule est à l'arrêt, ce miroir est basculé de façon à ne pas subir inutilement les agressions du rayonnement solaire et à éviter qu'il ne produise des reflets inopportuns.

Par ailleurs, l'inclinaison de ce miroir doit être ajustée en fonction de la taille et la position du conducteur, et ensuite être maintenue en position avec une grande raideur pour éviter des vibrations modifiant l'angle de vision et de projection.

Il est donc nécessaire de commander le déplacement de ce miroir en rotation avec un basculement rapide pour l'effacement du miroir et un déplacement précis pour son orientation, avec un angle d'une amplitude d'environ ± 3° pour le réglage fin et d'une amplitude de 20° pour l'effacement (ces valeurs peuvent varier en fonction des spécificités du véhicule). Par effacement, on entend le basculement du miroir dans une position où il ne peut plus réfléchir les rayons solaires vers l'optique de projection ou vers l'habitacle du véhicule. Généralement, le miroir est rabattu parallèlement au fond du dispositif de projection dans la position effacée.

### État de la technique

On connaît dans l'état de la technique le brevet japonais JP2002252378 décrivant un mécanisme d'actionnement d'un miroir en prise directe du moteur équipé d'un engrenage réducteur. Le dispositif d'affichage pour véhicules automobiles décrit dans ce document de l'art antérieur comporte un élément de projection émettant un faisceau optique sur un miroir. Un moyen d'entraînement assure le déplacement angulaire du miroir à une première vitesse en temps ordinaire ou à une seconde vitesse supérieure à la première vitesse.

Lorsqu'un contacteur d'allumage est mis hors tension, les moyens d'entraînement déplacent angulairement le miroir vers une position angulaire où la lumière du soleil est non réfléchie par l'élément de projection et lorsque le contacteur d'allumage est mis sous tension, il déplace angulairement le miroir vers une position initiale où la lumière d'affichage est visible, le tout à la deuxième vitesse.

On connaît aussi dans l'état de la technique le brevet US5296868.

Ce document décrit un dispositif d'affichage de type « tête haute » où le miroir peut varier légèrement entre deux positions, l'une correspondant à l'utilisation diurne, l'autre à l'utilisation nocturne.

Lorsque l'élément réfléchissant de cette solution de l'art antérieur est à dans une première position, la lumière visible émis par les moyens d'affichage émettant de la lumière est totalement réfléchie par l'élément réfléchissant de manière à être observée visuellement avec une grande luminosité par un conducteur du véhicule. D'autre part, lorsque l'élément réfléchissant est dans une deuxième position, la lumière visible est réfléchie à un faible taux de réflexion par l'élément réfléchissant, et cette lumière visible réfléchie par l'élément réfléchissant est visuellement observée dans une faible luminosité par le conducteur.

Le miroir est articulé, selon cette invention, selon un axe transversal au niveau d'un des bords du miroir.

La demande de brevet JP2004061861 décrit un autre exemple de dispositif d'affichage motorisé.

### Inconvénient de l'art antérieur

Les solutions de l'art antérieur présentent plusieurs inconvénients.

Ils impliquent souvent le positionnement d'organes de commande situés dans une zone entre le miroir basculant et l'élément de projection, ou en arrière du miroir basculant, ce qui conduit à augmenter l'encombrement du dispositif.

Par ailleurs, les solutions de l'art antérieur ne permettent pas de concilier la contrainte d'un basculement rapide pour l'effacement, nécessitant un couple élevé, avec un basculement très précis pour l'adaptation aux spécificités du conducteur.

Enfin, les solutions de l'art antérieur génèrent des bruits de fonctionnement préjudiciables pour le confort acoustique dans l'habitacle.

Dans les solutions de l'art antérieur, la chaîne de transmission entre la came entraînée par le moteur et l'élément à déplacer comporte généralement plusieurs pièces intermédiaires, telles qu'un engrenage, ou des broches. Cela complique le montage et introduit des sources de dysfonctionnement (usure, jeux angulaires ou en translation, glissements,...)

### Solution apportée par l'invention

Afin de remédier à ces inconvénients, l'invention concerne selon son acception la plus générale un dispositif d'affichage pour véhicules qui comprend un élément de projection émettant la lumière d'affichage et un miroir destiné à réfléchir la lumière d'affichage, ledit miroir étant animé par un moyen d'entraînement destiné à son déplacement angulaire constitué par un moteur qui entraîne directement une came présentant un segment de rayon croissant pour le réglage de l'orientation du miroir en position active, la surface périphérique de la came venant en contact glissant contre la surface du miroir ou d'un appui latéral prolongeant ledit miroir caractérisé en ce que ledit miroir est mobile en basculement par rapport à un axe de rotation transversal positionné au milieu de la hauteur du miroir et en ce que ladite came présente un profil défini par une fonction rayon/angle particulière, avec une zone angulaire où le rayon évolue de manière linéaire, pour l'ajustement fin, prolongée par une zone angulaire où la variation du rayon est plus importante pour assurer le déplacement rapide vers une position d'effacement.

L'invention porte sur un dispositif d'affichage permettant également de régler avec un faible débattement l'orientation angulaire d'un miroir par rapport à une direction d'observation et une direction d'éclairage.

Avantageusement, le dispositif d'affichage selon l'invention comporte un ressort de rappel du miroir contre la surface de la came.

Selon un mode de réalisation particulier, ledit ressort de rappel est un ressort spiral, entourant l'axe de pivotement du miroir.

La came réalise ainsi l'interface entre la sortie directe du moteur (piloté par exemple en pas-à-pas) et l'élément à mouvoir, sans pièce intermédiaire. Cette solution de contact direct de la surface périphérique de la came avec la surface du miroir permet d'assurer, en combinaison avec un ressort, une grande raideur évitant les vibrations parasites du miroir et permettant de résister à des efforts inappropriés exercés sur le miroir, et d'assurer aussi un ajustement précis de la position lors des étapes de réglage de l'orientation. Elle permet aussi de réduire significativement les nuisances sonores du fait du nombre réduit de pièces en mouvement.

De préférence, ladite came comporte en outre un second moyen pour entraîner le basculement du miroir dans la position d'effacement. Ce second moyen produit un basculement à une vitesse supérieure par rapport à la vitesse de réglage fin assuré par la came.

Selon un premier mode de réalisation ledit second moyen est constitué par un second segment de la came de rayon croissant. La came présente ainsi une première zone de glissement de sa surface périphérique sur la surface du miroir ou de son prolongement, avec une variation faible du rayon en fonction de l'orientation angulaire de la came, et une deuxième zone où le rayon varie plus rapidement en fonction de l'orientation angulaire de la came. La zone de faible variation du rayon permet d'assurer le déplacement précis pour l'ajustement de l'orientation du miroir en fonction de la taille et de la position du conducteur par exemple. Lorsqu'on dépasse la zone de réglage fin, la poursuite de la rotation de la came se traduit par le contact entre la surface périphérique correspondant à la seconde zone, où le rayon varie plus rapidement, ce qui entraîne un pivotement plus rapide du miroir.

Selon un mode de réalisation particulier, le dispositif comporte en outre des moyens de détection de butée par mesure du courant d'alimentation du moteur.

Selon un mode de mise en œuvre particulier, le dispositif comporte en outre une bielle d'effacement commandant le déplacement rapide de grande amplitude, dont une extrémité est articulée avec un pivot s'étendant perpendiculairement à la surface transversale de la came, et l'autre extrémité est guidée par une fente de guidage formée sur une pièce solidaire du miroir, ladite fente permettant le déplacement libre de l'extrémité de la bielle d'effacement, pour les orientations du miroir correspondant aux positions actives, l'extrémité de la bielle contraignant le basculement du miroir lorsqu'elle arrive en butée de ladite fente.

Selon une autre variante particulière, le dispositif comporte en outre une bielle de verrouillage commandant le blocage en position stable du système, sans alimentation du moteur, ladite bielle de verrouillage présentant une extrémité articulée avec un pivot s'étendant perpendiculairement à la surface transversale de la came, l'autre extrémité étant guidée par une fente de guidage formée sur le bâti supportant le moteur, ladite fente présentant une butée déformable réduisant la section de la fente en un point correspondant à la position stable sans courant du miroir.

Selon une autre variante de réalisation, la came comporte en outre un pion commandant le blocage en position stable sans courant par l'intermédiaire d'une zone déformable élastiquement prévue sur le bâti.

De préférence, le moteur est positionné latéralement par rapport au miroir pour libérer tout le volume à l'avant et à l'arrière du miroir.

Le miroir peut donc être déplacé avec deux types de mouvements :
- un type de mouvement correspondant au mode « positionnement actif » : ajustement fin et précis de l'inclinaison du miroir selon les exigences du conducteur, par pilotage et premier segment de la came, correspondant à un mouvement avec une première vitesse
- un type de mouvement correspondant au mode « positionnement d'effacement » : pivotement rapide du miroir pour mise en position protégée correspondant à un mouvement avec une deuxième vitesse plus rapide, assurée par un système à bielle, ou un système à butée.

### Description détaillée d'un exemple non limitatif de l'invention

La présente invention sera mieux comprise à la lecture de la description détaillée d'un exemple non limitatif de l'invention qui suit, se référant aux dessins annexés où :
- les figures 1 et 2 représentent des vues de côté d'un dispositif selon l'invention, correspondant à une première variante de réalisation, respectivement avec et sans le ressort de rappel,
- la figure 3 représente une vue de face d'un dispositif selon l'invention correspondant à une deuxième variante de réalisation avec un mécanisme de deux bielles,
- les figures 4 à 6 représentent des vues correspondant à différentes positions de la came selon la deuxième variante.

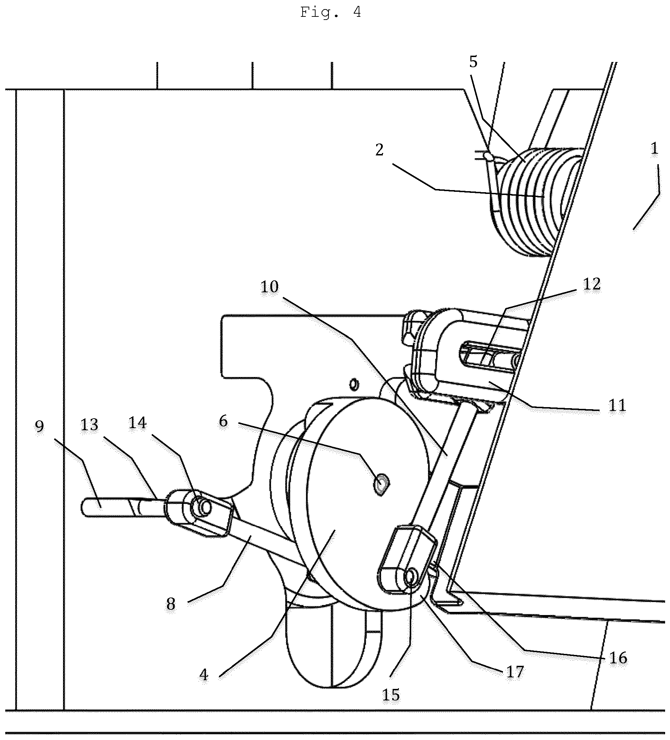

   Figure 4 : position initiale en butée.

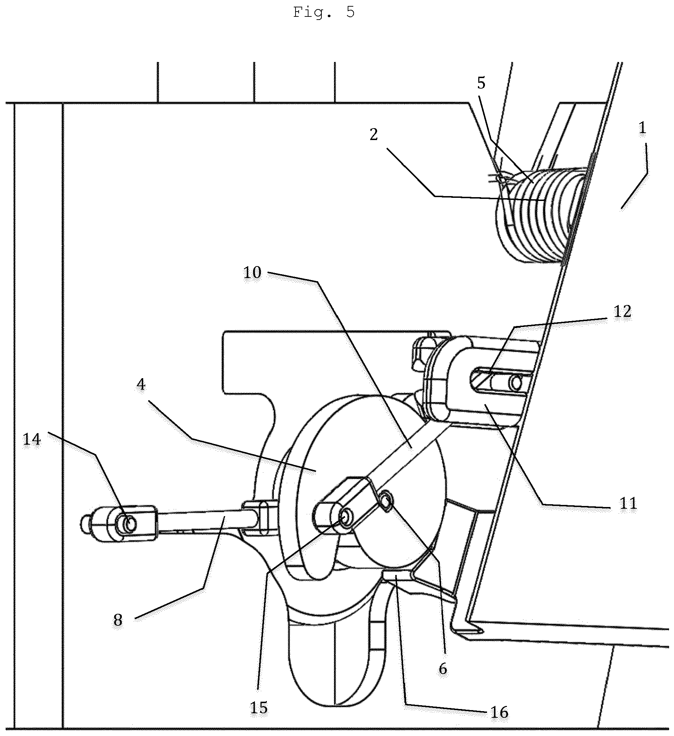

   Figure 5 : le positionnement actif.

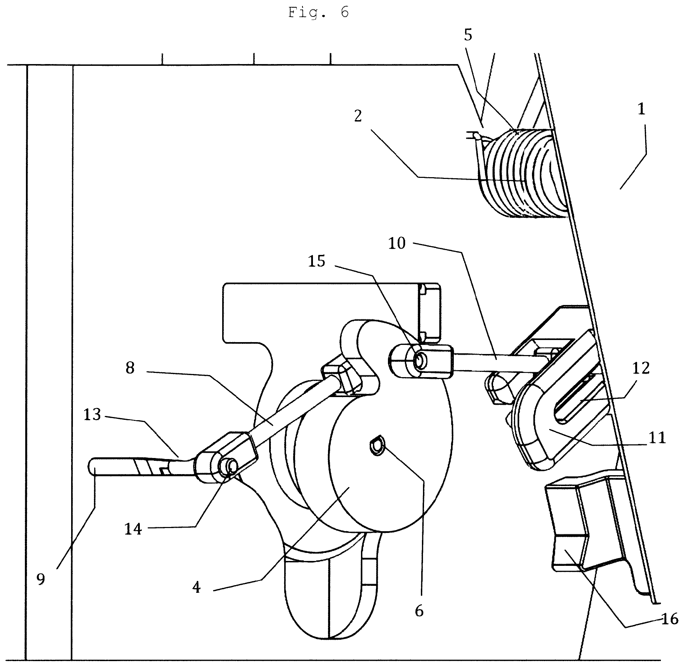

   Figure 6 : le positionnement d'effacement.

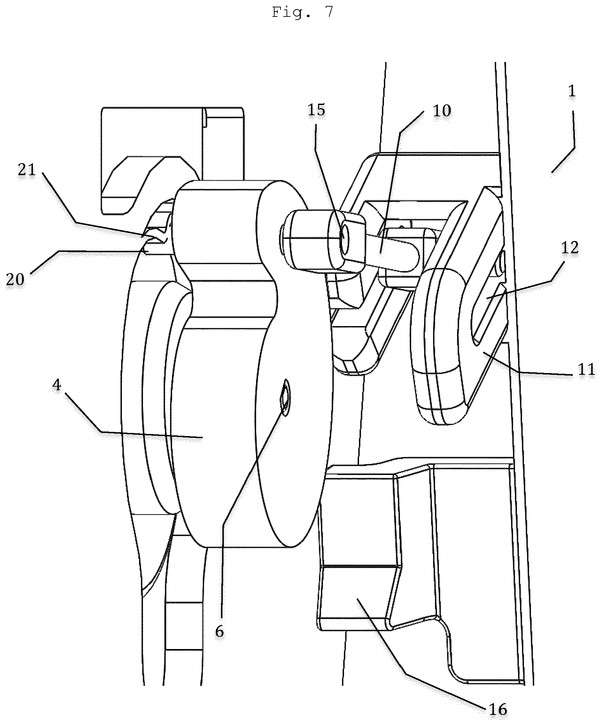

- la figure 7 représente une vue de côté d'un dispositif selon l'invention, correspondant à une troisième variante de réalisation avec une bielle unique.

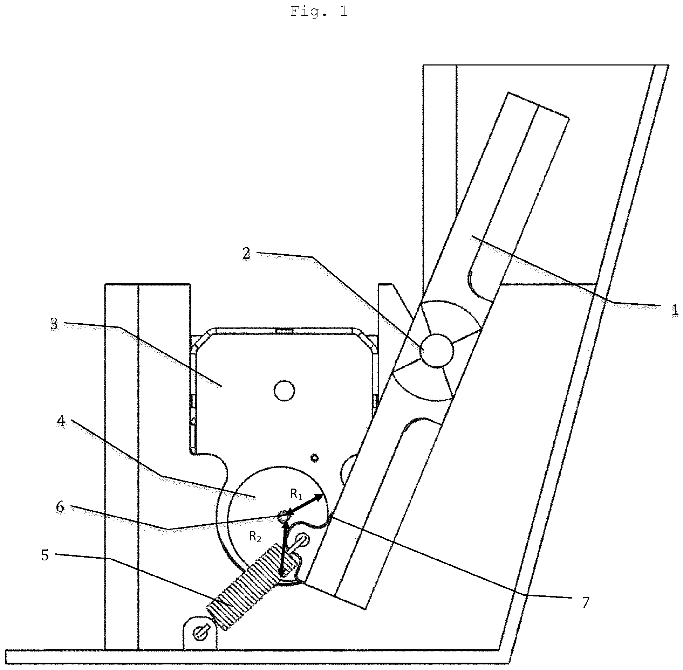

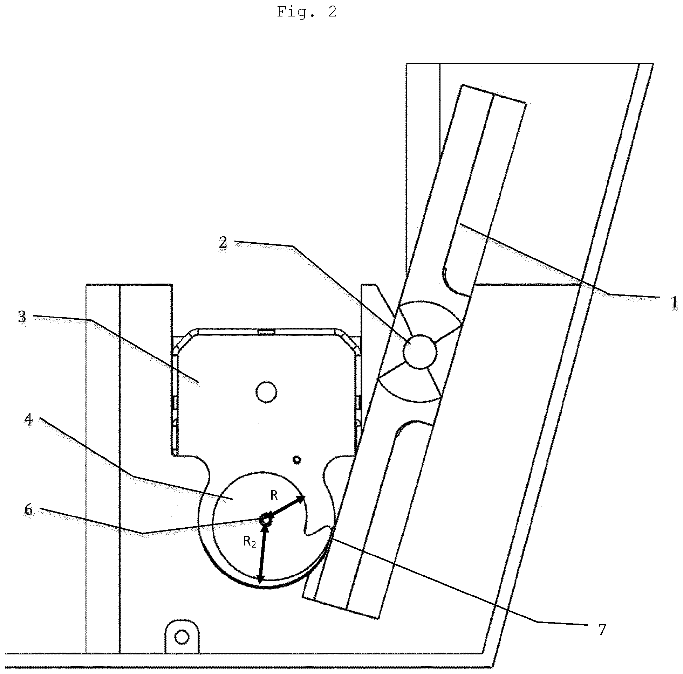

### Premier exemple de réalisation (figures 1 et 2).

Le dispositif représenté à titre d'exemple d'une première variante de réalisation en figures 1 et 2 comprend un miroir (1) de forme générale rectangulaire pivotant autour d'un axe transversal (2). Le miroir est symétrique par rapport à cet axe (2) positionné en situation médiane par rapport au miroir, de façon à ce que le miroir soit équilibré par rapport à cet axe.

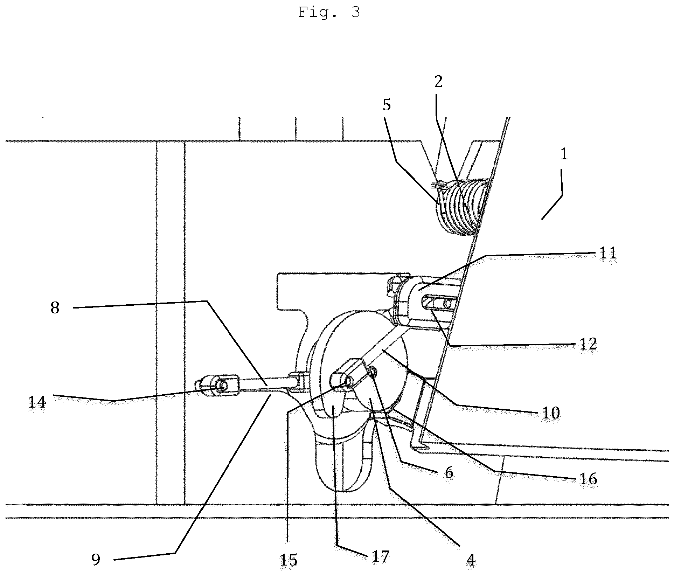

Un moteur (3) entraîne une came (4) dont la surface périphérique vient en appui contre la surface avant du miroir (1). L'appui peut aussi être réalisé sur un appui latéral (16) comme on peut l'apprécier en figures 3 à 7. Un ressort de rappel (5) assure une contrainte d'appui du miroir (1) contre la surface périphérique de la came (4). Il est visible en figure 1 et retiré en figure 2.

La came (4) présente un profil « en escargot » dont le rayon augmente depuis une valeur minimale R₁ jusqu'à une valeur maximale R₂. La surface périphérique de cette came (4) est en contact glissant avec la surface du miroir (1), ou avec une excroissance prolongeant latéralement le miroir. En fonction de la position angulaire de la came (4), la zone d'appui se décale sur l'axe passant par l'axe (6) de la came (4) et la ligne de contact (7) entre la surface du miroir (1) et la surface périphérique de la came (4).

Ce décalage modifie l'orientation angulaire du miroir (1).

Cette première variante de réalisation illustrée par la figure 1 concerne une réalisation avec une came (4) assurant le déplacement par un contact glissant sur la surface du miroir (1) ou d'un prolongement du miroir, le ressort (5) assurant l'appui du miroir (1) contre la came (4). Il s'agit de ce qui a été défini précédemment comme positionnement actif.

Optionnellement, la came (4) peut présenter un profil défini par une fonction rayon/angle particulière, avec une zone angulaire où le rayon évolue de manière linéaire, pour l'ajustement fin, prolongée par une zone angulaire où la variation du rayon est plus importante pour assurer le déplacement rapide.

Il est également possible de prévoir une zone additionnelle avec un rayon évoluant de manière moins importante, pour assurer le rangement à basse vitesse du miroir (1) vers la position rabattue en fin de course du moteur.

### Deuxième variante de réalisation (figures 3, 4, 5 et 6)

Selon cette alternative, le mécanisme comprend, comme dans la première variante de réalisation, une came (4) avec un profil adapté pour assurer le basculement du miroir (1) par un contact glissant entre la surface de la came et la surface du miroir ou d'un appui latéral (16) du miroir (positionnement actif).

Cette variante diffère de la précédente par la présence d'un système de bielles, l'une d'elles commandant le déplacement du miroir à plus grande vitesse, pour l'effacement du miroir (positionnement d'effacement).

La came (4) est traversée, selon cette variante de réalisation, par un pivot (15) sur lequel sont articulées les têtes de deux bielles (8, 10).

La bielle de verrouillage (8) est destinée à maintenir le miroir (1) en position stable basculée, en particulier lorsque le moteur (3) n'est plus alimenté en courant. La tête de la bielle de verrouillage (8) opposée au pivot (15) est guidée par une fente (9). Cette fente (9) présente une butée déformable sous la forme d'un rétrécissement (13) d'une section légèrement inférieure à l'ergot (14) traversant la tête de la bielle de verrouillage (8). L'élasticité du bord de la fente (9) permet le passage en force de l'ergot (14). Au repos, le rétrécissement forme une butée empêchant le déplacement de la tête de la bielle de verrouillage (8). Dans cette position, la bielle de verrouillage (8) empêche la rotation de la came (4), et le miroir (1) reste alors dans sa position rabattue jusqu'à ce que la came (4) soit à nouveau entraînée par le moteur (3).

La deuxième bielle (10) est destinée à provoquer le basculement (ou l'effacement) rapide, lorsque le miroir a atteint la limite angulaire de l'ajustement fin.

Pour cela, la tête de la bielle d'effacement (10) opposée au pivot (15) est guidée par une fente (12) prévue dans une excroissance (11) s'étendant perpendiculairement au miroir (1). La tête de la bielle d'effacement (10) se déplace librement dans la fente (12) pendant la rotation de la came (4) correspondant à l'ajustement fin. Lorsqu'elle arrive en butée contre l'extrémité de la fente, elle repousse le miroir (1) dans un déplacement angulaire rapide, lorsque la came (4) continue à tourner.

Lorsque la came (4) tourne dans le sens trigonométrique, la surface périphérique repousse le miroir (1) en raison du rayon croissant, comme représenté en figures 4 et 5. Les deux têtes des bielles (8 et 10) se déplacent librement dans les fentes respectivement (9 et 12).

Lorsque la tête de la bielle d'effacement (10) arrive en butée contre l'extrémité de la fente (12) comme représenté en figure 6, le basculement du miroir (1) n'est plus assuré par le contact glissant sur la surface périphérique de la came (4), mais par l'action de la bielle d'effacement (10) sur l'excroissance (11), avec un mouvement rapide. Le mouvement de basculement est plus rapide car la distance entre l'excroissance (11) et l'axe de pivotement (2) du miroir est inférieure à la distance entre la ligne de contact entre le miroir et la came (4), et l'axe de pivotement (2).

Pour assurer une auto-calibration du dispositif, on fait tourner le moteur (3), et on mesure le courant consommé par le moteur. On enregistre la position de référence lorsque le courant dépasse une valeur seuil prédéterminée, correspondant à la position « minimum » (ex. -3%) de réglage, où le miroir est en position contre une butée, comme représenté en figure 4. Sur cette figure 4 l'extrémité (17) de la came (4) est en butée contre l'appui latéral (16), verrouillant la position de référence.

### Troisième variante de réalisation (figure 7)

La figure 7 représente une autre alternative où le système comporte une seule bielle d'effacement (10). Dans la variante précédente, la deuxième bielle de verrouillage (8) assure le maintien en position lorsque le moteur (3) n'est plus alimenté.

Cette deuxième bielle de verrouillage (8) est optionnelle et le mécanisme peut fonctionner avec une seule bielle, comme illustré par la figure 7.

Comme dans l'exemple précédent, la bielle unique (10) a pour fonction de repousser le miroir (1) en position d'effacement après la perte de contact avec la came (4).

Dans cette troisième variante, le verrouillage est assuré non pas par une deuxième bielle, mais par un pion (20) solidaire de la came (4), se déplaçant dans un chemin présentant une butée déformable élastiquement (21).

## Revendications

1. - Dispositif d'affichage pour véhicules qui comprend un élément de projection émettant la lumière d'affichage et un miroir (1) destiné à réfléchir la lumière d'affichage, ledit miroir (1) étant animé par un moyen d'entraînement destiné à son déplacement angulaire constitué par un moteur (3) qui entraîne directement une came (4) présentant un segment de rayon croissant pour le réglage de l'orientation du miroir (1) en position active, la surface périphérique de la came (4) venant en contact glissant contre la surface du miroir (1) ou d'un appui latéral (16) prolongeant ledit miroir (1) **caractérisé en ce que** ledit miroir est mobile en basculement par rapport à un axe de rotation transversal positionné au milieu de la hauteur du miroir et **en ce que** ladite came (4) présente un profil défini par une fonction rayon/angle particulière, avec une zone angulaire où le rayon évolue de manière linéaire, pour l'ajustement fin, prolongée par une zone angulaire où la variation du rayon est plus importante pour assurer le déplacement rapide vers une position d'effacement.

2. - Dispositif d'affichage selon la revendication 1 **caractérisé en ce qu'**il comporte un ressort de rappel (5) du miroir (1) contre la surface de la came (4).

3. - Dispositif d'affichage selon la revendication précédente **caractérisé en ce que** ledit ressort de rappel (5) est un ressort spiral, entourant l'axe de pivotement (2) du miroir.

4. - Dispositif d'affichage selon la revendication 1 **caractérisé en ce que** ladite came (4) comporte en outre un second moyen pour entraîner le basculement du miroir (1) dans la position d'effacement.

5. - Dispositif d'affichage selon la revendication 4 **caractérisé en ce que** ledit second moyen est constitué par un second segment de la came (4) de rayon croissant.

6. - Dispositif d'affichage selon la revendication 1 **caractérisé en ce qu'**il comporte en outre des moyens de détection de butée par mesure du courant d'alimentation du moteur (3).

7. - Dispositif d'affichage selon la revendication 1 **caractérisé en ce qu'**il comporte en outre une bielle d'effacement (10) commandant le déplacement rapide de grande amplitude, dont une extrémité est articulée avec un pivot (15) s'étendant perpendiculairement à la surface transversale de la came (4), et l'autre extrémité est guidée par une fente de guidage (12) formée sur une pièce solidaire du miroir (11), ladite fente (12) permettant le déplacement libre de l'extrémité de la bielle d'effacement (10), pour les orientations du miroir (1) correspondant aux positions actives, l'extrémité de la bielle (10) contraignant le basculement du miroir (1) lorsqu'elle arrive en butée de ladite fente (12).

8. - Dispositif d'affichage selon la revendication précédente **caractérisé en ce qu'**il comporte en outre une bielle de verrouillage (8) commandant le blocage en position stable sans courant, ladite bielle de verrouillage (8) présentant une extrémité articulée avec un pivot (15) s'étendant perpendiculairement à la surface transversale de la came (4), l'autre extrémité étant guidée par une fente (9) de guidage formée sur le bâti supportant le moteur (3), ladite fente (9) présentant une butée déformable (13) réduisant la section de la fente en un point correspondant à la position stable sans courant du miroir (1).

9. - Dispositif d'affichage selon la revendication 7 **caractérisé en ce que** la came (4) comporte en outre un pion (20) commandant le blocage en position stable sans courant par l'intermédiaire d'une zone déformable élastiquement (21) prévue sur le bâti.

10. - Dispositif d'affichage selon la revendication 1 **caractérisé en ce que** ledit moteur (3) est positionné latéralement par rapport au miroir (1) pour libérer tout le volume à l'avant et à l'arrière du miroir (1).

## Patentansprüche

1. Anzeigevorrichtung für Fahrzeuge, die ein Projektionselement, das Anzeigelicht emittiert, und einen Spiegel (1) umfasst, der dafür bestimmt ist, das Anzeigelicht zu reflektieren, wobei der Spiegel (1) durch ein Antriebsmittel angetrieben wird, das für seine Winkelverschiebung bestimmt ist, das aus einem Motor (3) besteht, der einen Nocken (4) direkt antreibt, der ein Segment mit zunehmendem Radius zum Einstellen der Ausrichtung des Spiegels (1) in die aktive Position vorweist, wobei die Umfangsoberfläche des Nockens (4) in Gleitkontakt mit der Oberfläche des Spiegels (1) oder einer seitlichen Stütze (16) kommt, die den Spiegel (1) verlängert, **dadurch gekennzeichnet, dass** der Spiegel relativ zu einer Querdrehachse, die in der Mitte der Höhe des Spiegels positioniert ist, kippbar ist und dass der Nocken (4) ein Profil vorweist, das durch eine bestimmte Radius/Winkel-Funktion mit einem Winkelbereich definiert ist, in dem sich der Radius für die Feineinstellung, durch einen Winkelbereich erweitert, linear entwickelt, in dem die Variation des Radius wichtiger zum Sicherstellen der schnellen Verschiebung zu einer eingezogenen Position ist.

2. Anzeigevorrichtung nach Anspruch 1, **dadurch gekennzeichnet, dass** sie eine Rückstellfeder (5) des Spiegels (1) an der Oberfläche des Nockens (4) aufweist.

3. Anzeigevorrichtung nach dem vorhergehenden Anspruch, **dadurch gekennzeichnet, dass** die Rückstellfeder (5) eine Spiralfeder ist, die die Schwenkachse (2) des Spiegels umgibt.

4. Anzeigevorrichtung nach Anspruch 1, **dadurch gekennzeichnet, dass** der Nocken (4) ferner ein zweites Mittel zum Antreiben der Kippung des Spiegels (1) in die eingezogene Position aufweist.

5. Anzeigevorrichtung nach Anspruch 4, **dadurch gekennzeichnet, dass** das zweite Mittel aus einem zweiten Segment des Nocken (4) mit zunehmendem Radius besteht.

6. Anzeigevorrichtung nach Anspruch 1, **dadurch gekennzeichnet, dass** sie ferner Anschlagerfassungsmittel durch Messen des Versorgungsstroms des Motors (3) aufweist.

7. Anzeigevorrichtung nach Anspruch 1, **dadurch gekennzeichnet, dass** sie ferner eine Einzugsschubstange (10) aufweist, die die schnelle Verschiebung mit großer Amplitude steuert, deren eines Ende mit einem Zapfen (15) gelenkig verbunden ist, der sich senkrecht zu der Queroberfläche des Nockens (4) erstreckt, und deren anderes Ende durch einen Führungsschlitz (12) geführt wird, der an einem integralen Teil des Spiegels (11) ausgebildet ist, wobei der Schlitz (12) die freie Verschiebung des Endes der Einzugsschubstange (10) für die Ausrichtungen des Spiegels (1) entsprechend den aktiven Positionen erlaubt, wobei das Ende der Schubstange (10) die Kippung des Spiegels (1) erzwingt, wenn er an den Schlitz (12) anschlägt.

8. Anzeigevorrichtung nach dem vorhergehenden Anspruch, **dadurch gekennzeichnet, dass** sie ferner eine Verriegelungsschubstange (8) aufweist, die die Feststellung in einer stabilen stromlosen Position steuert, wobei die Verriegelungsschubstange (8) ein Ende vorweist, das mit einem Zapfen (15) gelenkig verbunden ist, der sich senkrecht zu der Queroberfläche des Nockens (4) erstreckt, wobei das andere Ende durch einen Führungsschlitz (9) geführt wird, der an dem Gestell ausgebildet ist, das den Motor (3) trägt, wobei der Schlitz (9) einen verformbaren Anschlag (13) vorweist, der den Abschnitt des Schlitzes an einem Punkt verringert, der der stabilen stromlosen Position des Spiegels (1) entspricht.

9. Anzeigevorrichtung nach Anspruch 7, **dadurch gekennzeichnet, dass** der Nocken (4) ferner einen Stift (20) aufweist, der die Blockierung in einer stabilen stromlosen Position durch einen elastisch verformbaren Bereich (21) steuert, der an dem Gehäuse vorgesehen ist.

10. Anzeigevorrichtung nach Anspruch 1, **dadurch gekennzeichnet, dass** der Motor (3) seitlich relativ zu dem Spiegel (1) zum Freigeben des gesamten Volumens an der Vorderseite und an der Rückseite des Spiegels (1) positioniert ist.

## Claims

1. Display device for vehicles which comprises a projection element that emits the display light, and a mirror (1) which is intended to reflect the display light, said mirror (1) being moved by a drive means which is intended to angularly move said mirror and consists of a motor (3) which directly drives a cam (4) having a segment of increasing radius for adjusting the orientation of the mirror (1) in an active position, the peripheral surface of the cam (4) coming into sliding contact with the surface of the mirror (1) or of a lateral support (16) which extends said mirror (1), **characterized in that** said mirror is tiltable with respect to a transverse axis of rotation positioned in the middle of the height of the mirror, and **in that** said cam (4) has a profile which is defined by a particular radius/angle function with an angular zone in which the radius varies linearly, for fine adjustment, extended by an angular zone in which the variation in the radius is greater in order to ensure rapid movement to a withdrawn position.

2. Display device according to claim 1, **characterized in that** it comprises a return spring (5) of the mirror (1) against the surface of the cam (4).

3. Display device according to the preceding claim, **characterized in that** said return spring (5) is a spiral spring which surrounds the pivot shaft (2) of the mirror.

4. Display device according to claim 1, **characterized in that** said cam (4) further comprises a second means for causing the mirror (1) to tilt into the withdrawn position.

5. Display device according to claim 4, **characterized in that** said second means consists of a second segment of the cam (4) of increasing radius.

6. Display device according to claim 1, **characterized in that** it further comprises means for detecting abutment by measuring the power supply current of the motor (3).

7. Display device according to claim 1, **characterized in that** it further comprises a withdrawal connecting rod (10) which controls the rapid movement of large amplitude, one end of which is hinged with a pivot (15) extending perpendicularly to the transverse surface of the cam (4), and the other end of which is guided by a guide slot (12) which is formed on a part secured to the mirror (11), said slot (12) allowing the end of the withdrawal connecting rod (10) to move freely, for the orientations of the mirror (1) corresponding to the active positions, the end of the connecting rod (10) forcing the mirror (1) to tilt when it comes into abutment against said slot (12).

8. Display device according to the preceding claim, **characterized in that** it further comprises a locking connecting rod (8) which controls the locking in a stable position without current, said locking connecting rod (8) having an end which is hinged with a pivot (15) extending perpendicularly to the transverse surface of the cam (4), the other end being guided by a guide slot (9) which is formed on the frame supporting the motor (3), said slot (9) having a deformable abutment (13) which reduces the cross section of the slot at a point corresponding to the stable position without current of the mirror (1).

9. Display device according to claim 7, **characterized in that** the cam (4) further comprises a pin (20) which controls the locking in the stable position without current by means of an elastically deformable zone (21) provided on the frame.

10. Display device according to claim 1, **characterized in that** said motor (3) is positioned laterally relative to the mirror (1) in order to expose the entire space at the front and at the rear of the mirror (1).
